# EUROPÄISCHE PATENTANMELDUNG

(11) **EP 4 815 486 A1**
(43) Veröffentlichungstag der Anmeldung: **30.09.2026**
(21) Anmeldenummer: 26167100.2
(22) Anmeldetag: 24.03.2026
(51) Int. Cl.: H04N 23/698, H04N 23/90

(54) **MOBILE MAPPING ANORDNUNG**

(30) Priorität: 24.03.2025 DE 202025101568 U
(71) Anmelder: JAWESO GmbH, 29614 Soltau (DE)
(72) Erfinder: Wegener, Jasper, 29614 Soltau (DE)
(74) Vertreter: RGTH

(57) **Zusammenfassung**

Die Erfindung betrifft eine Mobile Mapping Anordnung (100) zur mobilen Erfassung raumbezogener Daten, insbesondere zur Outdoor-Anwendung, umfassend mindestens eine Kamera (10, 10a, 10b), wobei die mindestens eine Kamera (10, 10a, 10b) ein Fisheye-Objektiv (11) mit einem Bildwinkel von mindestens 180° umfasst, eine Auflösung von mindestens 100 Megapixeln aufweist und einen als Global Shutter ausgebildeten Verschluss aufweist, sowie eine Auswerteeinheit (50), die zum Empfang und zur Verarbeitung von von der mindestens einen Kamera (10, 10a, 10b) empfangenen Daten und zur Ausgabe von Bilddaten ausgebildet ist.

## Beschreibung

### Technisches Feld

Die Erfindung betrifft eine Mobile Mapping Anordnung zur mobilen Erfassung raumbezogener Daten, insbesondere zur Outdoor-Anwendung.

### Stand der Technik

Mobile Mapping- und Geodatenerfassungstechnologien sind heutzutage essenziell für Kartografie, Geoinformationssysteme und autonomes Fahren. Sie erfassen räumliche Daten zur Analyse und Verarbeitung ihrer Umgebung. Mobile Mapping Anordnungen können Kameras, Sensoren und sonstige Verarbeitungseinheiten umfassen. Solche Anordnungen sind häufig entweder auf Fahrzeugen montiert oder als tragbare Geräte vorgesehen. Mobile Mapping Anordnungen unterstützen die digitale Transformation und bieten Daten für intelligente städtische Lösungen und Mobilitätsdienste.

Viele bekannte Mobile Mapping Anordnungen erzeugen Punktwolken mit Georeferenzierung. Für viele Anwendungen und Nutzer sind Datensätze aus Punktwolken jedoch nicht ausreichend bzw. zufriedenstellend, da zum einen Bilddaten gegenüber Punktwolken anwenderfreundlicher sind und ein geringeres Maß an Fachkenntnis seitens des Nutzers erforderlich machen und zum anderen von Nutzern in letzter Zeit verstärkt hochauflösende Bilder gefordert werden, z.B. um Beschädigungen an bestehender Infrastruktur oder Schilder in größerer Entfernung erkennen zu können.

Somit stehen Mobile Mapping Anordnungen zur Erfassung raumbezogener Daten, insbesondere solche, die zur Erfassung von raumbezogenen Daten im Freien und somit zur Outdoor-Anwendung ausgebildet sind, vor technischen Herausforderungen. Um eine ausreichend hohe Auflösung von Bilddaten liefern zu können, nutzen bekannte Mobile Mapping Anordnungen zahlreiche Kameras (z.B. sechs Stück), was zu Überlappungen der Sichtfelder und einer Erhöhung des Parallaxenfehler-Risikos führt. Ferner erschwert dies die Ausrichtung der einzelnen Kameras. Zudem erhöhen diese Setups die Anforderungen an die Datenverarbeitung signifikant. Die nötige Rechenleistung und Bildbearbeitungskapazität verlängern die Verarbeitungszeit und steigern die Fehlerwahrscheinlichkeit beim Bildzusammenführen. Häufig besteht bei diesem System daher Bedarf an externen Recheneinheiten, was die Installation des Systems erschwert und die Effizienz in mobilen Mapping-Anwendungen, wo Flexibilität gefragt ist, verringert.

Weiterhin besteht bei bekannten, einfacher aufgebauten Mobile Mapping Anordnungen dagegen das Problem, dass diese keine ausreichend hohe Auflösung und somit nicht eine von Nutzern häufig geforderte Detailgenauigkeit bieten.

### Darstellung der Erfindung: Aufgabe, Lösung, Vorteile

Der vorliegenden Erfindung liegt die Aufgabe zugrunde, eine Mobile Mapping Anordnung zum effizienten Erfassen und Verarbeiten raumbezogener Daten mit hoher Auflösung zu schaffen, welche im Hinblick auf Aufbau und Bedienbarkeit nicht komplex ist.

Diese Aufgabe wird gelöst durch eine Mobile Mapping Anordnung zur mobilen Erfassung raumbezogener Daten, insbesondere zur Outdoor-Anwendung, umfassend mindestens eine Kamera, wobei die mindestens eine Kamera ein Fisheye-Objektiv mit einem Bildwinkel von mindestens 180° umfasst, eine Auflösung von mindestens 100 Megapixeln aufweist und einen als Global Shutter ausgebildeten Verschluss aufweist, sowie eine Auswerteeinheit, die zum Empfang und zur Verarbeitung von von der mindestens einen Kamera empfangenen Daten und zur Ausgabe von Bilddaten ausgebildet ist.

Die Mobile Mapping Anordnung kann bevorzugt auch ausgebildet sein Positionsdaten zu erfassen und darüber ihre jeweilige Position zu bestimmen. In jedem Fall ist die Anordnung aber ausgebildet dreidimensionale Raumdaten zu erfassen, zu verarbeiten und auszugeben.

Die Anordnung ist mobil bzw. zur mobilen Erfassung von Daten ausgebildet, d.h. sie ist nicht stationär und kann entsprechend von einem Nutzer an Orte gebracht werden, an denen die Umgebung bildtechnisch erfasst werden soll. Insbesondere ist die Anordnung dafür tragbar ausgebildet. Auch kann die Anordnung bevorzugt zur Montage an Fahrzeugen, wie PKW, LKW, Bahnfahrzeugen, Drohnen, Wasserfahrzeugen, etc. ausgebildet sein. Ferner ist die Anordnung insbesondere zur Verwendung im Freien, d.h. zur Outdoor-Verwendung, ausgebildet.

Die Anordnung umfasst mindestens eine Kamera, die mit einem Fisheye-Objektiv ("Fischaugenobjektiv") ausgestattet ist. Dieses Fisheye-Objektiv ist in der Lage, einen extremen Bildwinkel von mindestens 180° abzudecken, was eine umfassende Erfassung des umgebenden Bereichs ermöglicht. Dadurch besteht die Möglichkeit, detaillierte und weitreichende Panoramabilder zu erzeugen.

Die Kamera verfügt ferner über eine hohe Bildauflösung von mindestens 100 Megapixeln, wodurch sie kleinste Details im aufgenommenen Bild darstellen kann. Diese hohe Auflösung ist hilfreich für die Erfassung komplexer Szenarien und Strukturen und ermöglicht eine präzise Verarbeitung und Analyse der erfassten Daten. So ist die Anordnung in der Lage mit nur mindestens einer Kamera hochauflösende Bilddaten zu erzeugen und auszugeben. So kann beispielsweise durch die Vorsehung der mindestens einen Kamera mit hoher Auflösung und großem Bildwinkel ein sonst bei Anordnungen aus dem Stand der Technik häufig notwendiges, vielfaches Stitching (Zusammensetzung eines Bildes aus den Raumdaten von vielen einzelnen Kameras), was zu verschlechterter Bildqualität führt, vermieden bzw. dessen negative Effekte reduziert werden. Dadurch werden Parallaxenfehler reduziert bzw. vermieden. Auch ergibt sich dadurch ein einfacher Aufbau und eine einfache Bedienbarkeit der Anordnung.

Durch den als Global Shutter ausgebildeten Verschluss der Kamera wird das Auftreten von Verzerrungen in den ausgegebenen Bilddaten verringert bzw. ganz vermieden. Solche Verzerrungen können sonst bei bekannten Anordnungen, insbesondere bei schnellen Bewegungen der Mobile Mapping Anordnung oder von Objektiven in der von ihr erfassten Umgebung, auftreten. Bei dem als Global Shutter ausgebildeten Verschluss werden jedoch alle Pixel des aufgenommenen Bildes zeitgleich belichtet und ausgelesen, wodurch Verzerrungen bei bewegten Objekten oder bei der mobilen Erfassung minimiert werden. Dies steht im Gegensatz zu herkömmlichen Verschlüssen, die Bilddaten Zeile für Zeile auslesen.

Ferner umfasst die Anordnung eine Auswerteeinheit, die ausgebildet ist, die von der mindestens einen Kamera erfassten Daten zu empfangen, zu verarbeiten und die verarbeiteten Daten als Bilddaten auszugeben. Die Auswerteeinheit umfasst bevorzugt eine Recheneinheit und/oder eine Speichereinheit zum Speichern der empfangenen Daten und/oder der auszugebenen Bilddaten. Ferner kann die Auswerteeinheit bevorzugt einen Sender zum Senden der auszugebenden Bilddaten an einen Empfänger, z.B. per WLAN, Bluetooth, Mobilfunk oder Satelliten-Uplink, umfassen. Ebenso kann die Auswerteeinheit zum Dekodieren der Bilddaten ausgebildet sein. Hierdurch ist die erfindungsgemäße Anordnung bevorzugt als autarke Einheit ausgebildet und ist insbesondere zur Erzeugung von Bilddaten nicht auf externe Recheneinheiten angewiesen. Auch entfallen bevorzugt Nachbearbeitungsschritte auf externen Geräten. Die Auswerteeinheit kann ausgebildet sein, die Bilddaten in Standardformaten auszugeben, wobei die Daten dann in allgemein anerkannten Dateitypen gehalten werden, die für Nutzer leicht weiter verarbeitbar sind.

Insbesondere die Gesamtheit der vorgeschriebenen Komponenten der erfindungsgemäßen Anordnung und ihrer technischen Eigenschaften bewirkt eine vielseitige Erfassung von Außendaten, die insbesondere für Anwendungen in Bereichen wie HD-Kartierung, Smart Cities, Schadensdetektion und Infrastrukturüberwachung vorteilhaft ist. Die Flexibilität, Genauigkeit und Einfachheit des Aufbaus und der Bedienung der Mobile Mapping Anordnung eröffnet verschiedene Einsatzmöglichkeiten, von automatisierten Vermessungsarbeiten bis hin zur Datensammlung für wissenschaftliche und kommerzielle Zwecke.

Bevorzugte Ausführungsformen der Erfindung sind nachstehend beschrieben.

Die Mobile Mapping Anordnung weist bevorzugt maximal zwei Kameras, insbesondere genau zwei Kameras, auf. Die beiden Kameras sind insbesondere derart ausgebildet und angeordnet, dass sie einen umfassenden Bildwinkel von 360° abdecken und somit eine vollständige sphärische Ansicht erfassen können. Beide Kameras sind bevorzugt gleich ausgebildet, was bedeutet, dass sie die gleiche Bauart und Spezifikation haben, um eine einheitliche Bildqualität zu gewährleisten.

Bevorzugt sind die Kameras Rücken an Rücken angeordnet, was bedeutet, dass sie mit ihren Rückseiten zueinander ausgerichtet sind, um den maximalen Bildbereich ohne gegenseitige Behinderung abzudecken. Alternativ ist auch eine verschwenkte Anordnung zueinander möglich, um im Einzelfall bestimmte Bildperspektiven zu optimieren. Rücken an Rücken angeordnete Kameras können auch einen Abstand zueinander aufweisen, was beschreibt, dass die Kameras sich zwar nicht direkt berühren, jedoch diametral zueinander, d.h. mit einem Versatz von 180° Bildwinkel, ausgerichtet sind.

Die Anordnung der beiden Kameras ist so gestaltet, dass sie optimal zusammenarbeiten, um von verschiedenen Positionen aus die Umgebung gemeinsam und umfassend zu erfassen und so eine vollständige sphärische Ansicht zu liefern. Dies gewährleistet eine lückenlose Darstellung der Umgebung.

Die Möglichkeit, mit nur zwei Kameras einen vollständigen Bildwinkel von 360° abzudecken, trägt zur Effizienz der Datenaufnahme bei, da die Notwendigkeit entfällt, viele einzelne Bildwinkel separat zu erfassen und zusammenzuführen. Dadurch, dass bei dieser bevorzugten Ausführungsform maximal zwei Kameras vorhanden sind und trotzdem ein vollständiger Bildwinkel von 360° erfasst werden kann, da beide Kameras einen Bildwinkel von mindestens 180° abdecken, wird der Aufbau der Anordnung gegenüber herkömmlichen Anordnungen vereinfacht. Auch unterstützt diese Ausführung mit nur zwei Kameras die Erstellung parallaxenfreier Bilddaten, da die Positionierung und Synchronisation der beiden Kameras darauf ausgelegt ist, Verzerrungen oder Verschiebungen, die durch unterschiedliche Betrachtungswinkel entstehen können, zu minimieren. Durch die Nutzung nur zweier Kameras wird die Anzahl der erforderlichen Stitching-Zonen deutlich verringert. Das bedeutet, dass die Übergangsbereiche zwischen den einzelnen Aufnahmen bei der Erstellung des Rundumbildes sehr präzise gestaltet werden können, was die Wahrscheinlichkeit von Fehlern während des Zusammenfügens der Bilddaten verringern kann. Diese Verbesserungen fördern die Genauigkeit und die Detailtreue der erzeugten Bilddaten und optimieren die Effizienz der Bildverarbeitungsprozesse.

Die Mobile Mapping Anordnung kann bevorzugt ein oder mehrere Sensoren, wie LiDAR-Sensoren, 3-D-Sensoren, IMU Sensoren oder VSLAM Sensoren, und/oder Empfänger, insbesondere GNNS oder RTK-GNSS Empfänger, umfassen, wobei die Sensoren und/oder Empfänger zur Weiterleitung der von ihnen erfassten Daten an die Auswerteeinheit ausgebildet sind, und wobei die Auswerteeinheit zur Verarbeitung der erfassten Daten ausgebildet ist. Die LiDAR-Sensoren können bevorzugt mehr als 500000 Punkte pro Sekunde erfassen und eine Reichweite von bis zu 150 Metern erzielen. 3-D Sensoren erzeugen dreidimensionale Bilder, während IMU-Sensoren, was für Inertiale Messeinheit steht, die Bewegungsanalyse unterstützen. VSLAM-Sensoren ermöglichen eine visuelle Kartierung und präzise Echtzeit-Positionierung, was durch die Integration mit Daten eines Empfängers, wie RTK-GNSS, einer Technik für Echtzeit-Korrekturen im Globalen Navigationssatellitensystem, weiter verbessert wird. Alle von den Sensoren und/oder Empfängern erfassten Daten werden in der Auswerteeinheit im Zusammenspiel mit den erfassten Kameradaten ausgewertet und verarbeitet. Durch die Vorsehung der Sensoren und/oder Empfänger können die auszugebenen Bilddaten weiter verbessert und/oder mit zusätzlichen Metadaten und Attributen versehen werden.

Bevorzugt umfasst die Mobile Mapping Anordnung ein Gehäuse, wobei die Auswerteeinheit in dem Gehäuse und die mindestens eine Kamera in oder an dem Gehäuse angeordnet sind. Ferner bevorzugt können gegebenenfalls vorhandene Sensoren und/oder Empfänger ebenfalls im oder am Gehäuse angeordnet sein. Eine im Gehäuse angeordnete Komponente ist dabei vollständig vom Gehäuse geschlossen und durch des Gehäuse nach außen hin gegenüber Umwelteinflüssen geschützt. Eine am Gehäuse angeordnete Komponente ist dagegen außen am Gehäuse angeordnet und insbesondere befestigt und nicht oder nur teilweise innerhalb des Gehäuses angeordnet. Die am Gehäuse angeordneten Komponenten können bevorzugt ein eigenes Gehäuse aufweisen, um sie gegen Umwelteinflüsse zu schützen.

Durch die Vorsehung eines Gehäuses, in dem und/oder an dem sämtliche Komponenten der erfindungsgemäßen Anordnung angeordnet und/oder befestigt sind, ergibt sich eine kompakte Bauweise und eine gute Transportfähigkeit, wodurch die Anordnung in verschiedenen Umgebungen flexibel einsetzbar ist. Der durch das Gehäuses bereitgestellte Schutz gegen Umwelteinflüsse, insbesondere für die im Inneren des Gehäuses angeordnete Auswerteeinheit, fördert die Anwendbarkeit in diversen klimatischen und geografischen Szenarien.

Bevorzugt kann die Gehäusewandung teilweise oder vollständig Kühlrippen umfassen oder aus diesen bestehen. Ebenso kann das Gehäuse einen oder mehrere Kühlkörper umfassen. Durch die Kühlrippen und/oder den Kühlkörper kann die durch die im Inneren des Gehäuses vorgesehene Auswerteeinheit generierte Abwärme einfacher nach außen an die Umwelt abgeführt werden. Ferner können die Kühlrippen die Stabilität des Gehäuses verbessern.

Bevorzugt ist das Gehäuse der Mobilen Mapping Anordnung als Schutz gegen, insbesondere raue, Umwelteinflüsse konzipiert. Es weist eine hohe Schutzklasse von IP65 oder höher, bevorzugt IP66 oder höher, auf und schützt so elektronische und mechanische Komponenten der Anordnung vor Wasser, Staub und Stößen. Die Schutzklasse IP66 bedeutet, dass das Gehäuse vollständig gegen das Eindringen von Staub geschützt ist und Wasserstrahlen aus beliebiger Richtung standhalten kann. Dies fördert die Langlebigkeit und die Flexibilität des Einsatzes bei Außenanwendungen.

Bevorzugt ist die Auswerteeinheit zur Endverarbeitung der empfangenen Daten, insbesondere in Echtzeit, und zur Erzeugung und Ausgabe fertiger Bilddatensätze ausgebildet. Hierdurch können alle Verarbeitungsprozesse in der Auswerteeinheit und somit in der Anordnung selbst erfolgen, was bedeutet, dass die Verarbeitung innerhalb der physischen Struktur der Anordnung erfolgt und keine externen Geräte benötigt werden. Für die Verarbeitungsprozesse ist die Auswerteeinheit bevorzugt mit einer entsprechenden Software ausgestattet, die die Verarbeitungsschritte, insbesondere autark, durchführt. Hierdurch wird die Bedienung weiter vereinfacht. Ferner bevorzugt kann die Verarbeitung in Echtzeit erfolgen, was bedeutet, dass die empfangenen Daten unmittelbar nach Empfang von der Auswerteeinheit analysiert, verifiziert und/oder zu einem Bilddatensatz weiter verarbeitet werden, der dann gespeichert oder auch unmittelbar ausgegeben werden kann. Insbesondere können hierdurch Nachbearbeitungsschritte entfallen und Bilddaten können unmittelbar verwendet werden. Auch ist hierdurch eine vollautarke Funktionalität der Anordnung gegeben.

Bevorzugt weist das Fisheye-Objektiv der mindestens einen Kamera einen Bildwinkel von größer 180°, bevorzugt von größer oder gleich 200°, besonders bevorzugt von größer oder gleich 220°, auf, wobei die Anordnung insbesondere zwei Kameras mit jeweils einem solchen Fisheye-Objektiv aufweist. Dadurch wird eine umfassende Umgebungserfassung ermöglicht, die zu hoher Bildqualität bei vollständig sphärischen Bilddaten führt. Durch den breiten Bildwinkel erfasst das Fisheye-Objektiv einen größeren Bereich. Insbesondere bei der Vorsehung zweier solcher Kameras sind die erzeugten Bilddaten dann im Wesentlichen parallaxenfrei, was bedeutet, dass zwei Bilder aus unterschiedlichen Perspektiven ohne sichtbare Verschiebungen zusammengefügt werden können, wodurch eine homogenere Darstellung entsteht. Sie verringert auch tote Winkel und fördert nahtlose Bildaufnahmen.

Bevorzugt weist die mindestens eine Kamera eine Auflösung von mindestens 120 Megapixeln auf, wobei bevorzugt zwei Kameras vorgesehen sind, die beide eine Auflösung von mindestens 120 Megapixeln aufweisen. Dies hilft feine Details in der Umgebung zu erfassen und in den Bilddaten darzustellen, was für präzise Anwendungen wie Kartierung und Überwachung nützlich ist. Besonders bevorzugt kann die Auflösung 125 Megapixel oder mehr betragen, was eine noch höhere Bildschärfe und Detailgenauigkeit gewährleistet, ideal für anspruchsvolle Anwendungen, die maximale Genauigkeit erfordern. Optional können zwei Kameras mit jeweils mindestens 120 Megapixeln verwendet werden, um auch in weitläufigen Bereichen und komplexen Szenarien detaillierte Informationen zu erfassen und darzustellen.

Bevorzugt weist die Anordnung einen Adapter auf, mittels dessen das Fisheye-Objektiv an der mindestens einen Kamera befestigt ist. Hierdurch können Kameras mit Fisheye-Objektiven verschiedener Hersteller kombiniert werden. Der Adapter sichert das Objektiv fest an der Kamera und gewährleistet eine konstante Bildqualität. Der Adapter erlaubt auch einen einfachen Austausch von Objektiven.

Bevorzugt ist die Anordnung als kompakte tragbare Einheit ausgebildet, sodass die Anordnung von einem Benutzer getragen und/oder an einem Fahrzeug, insbesondere auf einem Fahrzeugdach, installiert werden kann. Hierdurch ist die Struktur der Anordnung handlich und einfach zu verschiedenen Einsatzorten transportierbar. Die Montagemöglichkeit auf Fahrzeugdächern erhöht die Vielseitigkeit der Einsetzbarkeit der Anordnung. Neben PKWs kann die Anordnung auch auf größeren Fahrzeugen wie LKWs, Zügen und Wasserfahrzeugen, oder auch auf Flugobjekten, wie Drohnen, montiert werden, wodurch sich die Einsatzmöglichkeiten weiter erhöhen.

Nachfolgend wird die Erfindung anhand von Ausführungsbeispielen näher erläutert. Es zeigen schematisch:
- Fig. 1A: eine perspektivische Ansicht einer erfindungsgemäßen Mobile Mapping Anordnung von schräg oben;
- Fig. 1B: eine Draufsicht auf die Anordnung aus Fig. 1A;
- Fig. 1C: eine perspektivische Ansicht der Anordnung aus Fig. 1A und 1B von schräg unten;
- Fig. 2: eine Seitenansicht der Anordnung der Fig. 1A bis 1C unter Weglassung einiger Komponenten;
- Fig. 3A: eine perspektivische Ansicht einer Kamera der erfindungsgemäßen Anordnung aus Fig. 1A bis 1C;
- Fig. 3B: eine perspektivische Ansicht eines Adapters der Kamera aus Fig. 3A; und
- Fig. 4: eine schematische Darstellung einer weiteren erfindungsgemäßen Anordnung.

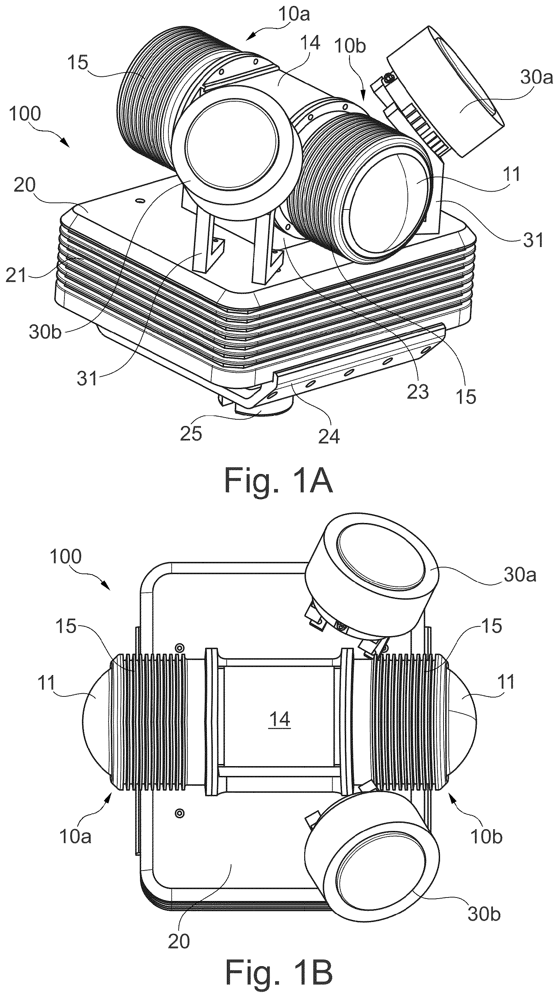

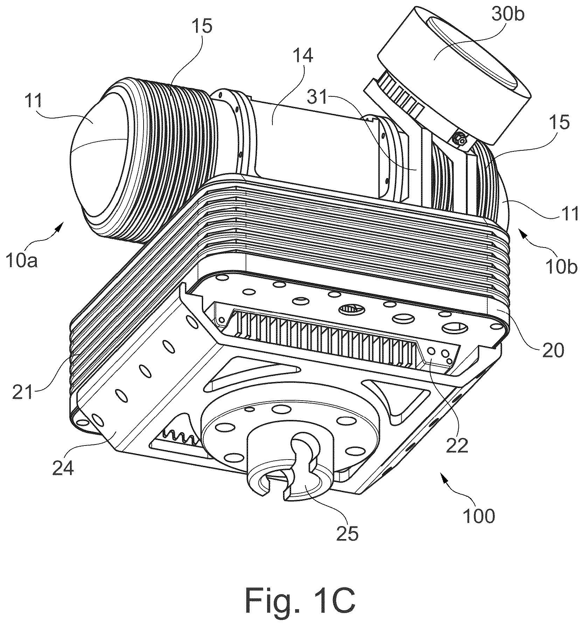

Figuren 1A bis 1C zeigen eine erfindungsgemäße Mobile Mapping Anordnung 100 aus verschiedenen Ansichten (perspektivische Ansicht von schräg oben, Draufsicht und perspektivische Ansicht von schräg unten). Die Anordnung 100 umfasst ein im Wesentlichen quaderförmiges Gehäuse 20, innerhalb dessen eine hier nicht gezeigte Auswerteeinheit angeordnet ist. Das Gehäuse 20 ist als IP66-Schutzgehäuse ausgeführt und in sich geschlossen und schützt so die darin liegende Auswerteeinheit vor Umwelteinflüssen. Die seitlichen Wandungen des Gehäuses 20 weisen in Umfangsrichtung umlaufende Kühlrippen 21 auf. An der Unterseite des Gehäuses 20 ist ein Kühlkörper 22, der ebenfalls Rippen aufweist und beispielsweise aus Aluminiumdruckguss ausgebildet sein kann, angeordnet. Die (in Fig. 1A bis 1C nicht dargestellte) Auswerteeinheit ist größtenteils innerhalb des Gehäuses 20 angeordnet und ist mit dem Kühlkörper 22 integriert derart ausgebildet, dass ein Teil der Auswerteeinheit zusammen mit dem Kühlkörper 22 durch die Unterseite des Gehäuses 20 herausgeführt ist, um hierdurch einen direkten Kühleffekt zu erzielen. Das Gehäuse 20 kann vorzugsweise aus Metall oder auch aus widerstandsfähigem Kunststoff hergestellt sein. An der Unterseite des Gehäuses 20 ist ferner eine Halterung 24 vorgesehen und mit dem Gehäuse fest verbunden, wobei die Halterung 24 in Form eines in der Seitenansicht betrachtet trapezförmigen Trägerblechs ausgebildet ist. An der Unterseite der Halterung 24 ist ein Montageelement 25 vorgesehen, mittels dessen die Anordnung 100 an einem beispielsweise an einem Fahrzeug angebrachten Gegenstück (hier nicht dargestellt) befestigt werden kann. Ebenso ist es möglich, einen Ständer oder dergleichen (hier ebenfalls nicht dargestellt) an dem Montageelement 25 zu befestigen.

Die Oberseite des Gehäuses 20 ist eben ausgebildet. Mittig auf der Oberseite des Gehäuses 20 ist ein im Wesentlichen quaderförmiger Kameramontagekörper 23 vorgesehen. Auf diesem Kameramontagekörper 23 sind zwei Kameras 10a, 10b montiert. Die Kameras 10a, 10b sind von einem oberhalb des Kameramontagekörpers 23 angeordneten Kameragehäuse 14 und zwei daran jeweils nach außen sich anschließenden, im Wesentlichen zylindrischen Schutzhülsen 15 abgedeckt, sodass jeweils endseitig nur das äußere Ende des jeweiligen Fisheye-Objektives 11 der Kameras 10a, 10b freiliegt.

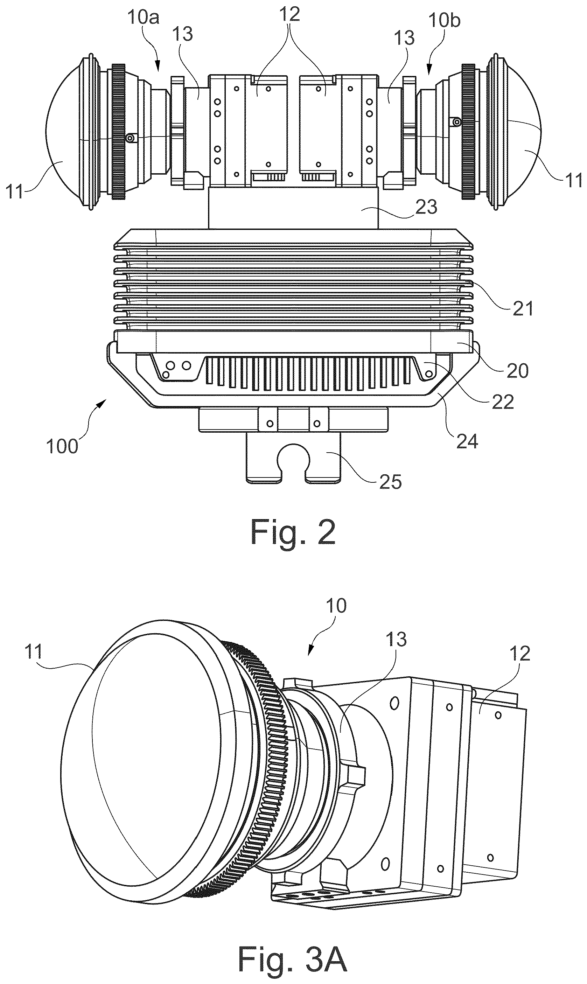

Figur 2 zeigt eine Seitenansicht der Anordnung 100 aus den Figuren 1A bis 1C, wobei hier zur besseren Übersicht das Kameragehäuse 14 und die Schutzhülsen 15 weggelassen sind. Wie aus Figur 2 erkennbar sind, sind die beiden Kameras 10a und 10b Rücken an Rücken und mit nur geringem Abstand voneinander angeordnet. Ein Kameragrundkörper 12 der jeweiligen Kameras 10a, 10b, die beide identisch ausgebildet sind, ist am Kameramontagekörper 23 befestigt. In den Kameragrundkörpern 12 ist jeweils ein Kamerasensor (hier nicht dargestellt) sowie ein als Global Shutter ausgebildeter Verschluss (hier nicht dargestellt) angeordnet. Seitlich zur jeweiligen Außenseite des Gehäuses 20 hin zeigend ist auf dem Kameragrundkörper 12 jeweils ein Adapter 13 montiert, an dem wiederum ein Fisheye-Objektiv 11 montiert ist. Wie in Figur 2 erkennbar ist, ragt ein Teil der Fisheye-Objektive 11 der Kameras 10a und 10b seitlich über das Gehäuse 20 hinaus.

Ferner sind auf der Oberseite des Gehäuses 20 jeweils zwei LiDAR-Sensoren 30a, 30b vorgesehen (siehe Figuren 1A bis 1C; in Fig. 2 sind die LiDAR-Sensoren der Übersichtlichkeit halber weggelassen). Die LiDAR-Sensoren 30a, 30b sowie die Kameras 10a, 10b sind jeweils mit Kabeln mit der Auswerteeinheit verbunden, um die von ihnen empfangenen Daten an die Auswerteeinheit weiterzuleiten (hier nicht dargestellt).

Die LiDAR-Sensoren 30a, 30b sind jeweils mittels einer LiDAR-Halterung 31 mit dem Gehäuse 20 fest verbunden.

Die Figur 3A zeigt eine perspektivische Seitenansicht einer einzelnen Kamera 10, die gemäß den Kameras aus der Anordnung 100 aus den Figuren 1A bis 1C ausgebildet ist, d.h., sie umfasst ebenfalls ein Fisheye-Objektiv 11, einen Kameragrundkörper 12 und einen Adapter 13, über den das Fisheye-Objektiv 11 am Kameragrundkörper 12 montiert ist.

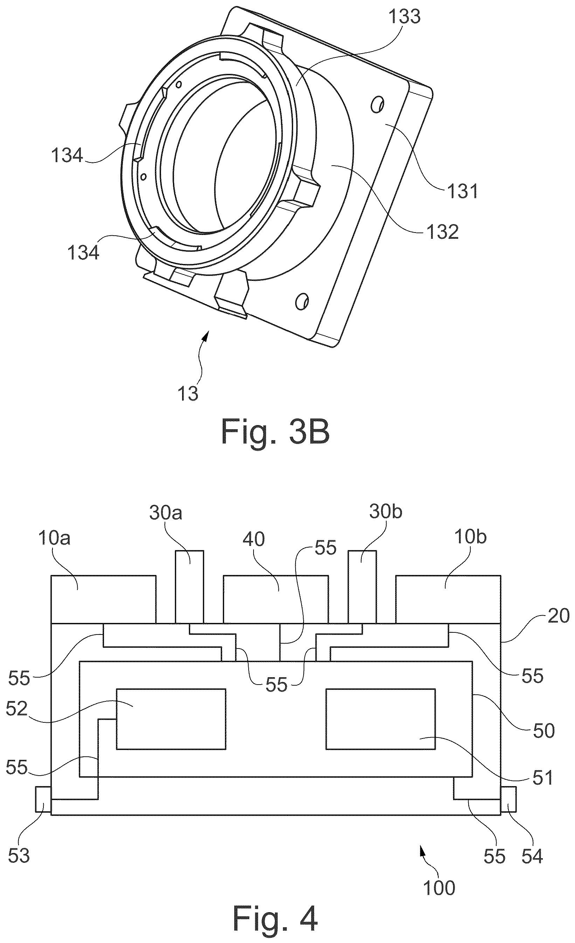

In Figur 3B ist eine Einzelansicht des Adapters 13 der Kamera 10 der Figur 3A gezeigt. Der Adapter weist eine Grundplatte 31 auf, mit der dieser am Kameragrundkörper 21 montiert ist. Zu derjenigen Seite hin, an der das Fisheye-Objektiv 11 an dem Adapter 13 montiert wird, steht von der Grundplatte 131 ein zylindrischer Stutzen 132 vor. Am Ende dieses Stutzens 132 ist ein auf diesem drehbar angebrachter Ring 133 fest angeordnet, wobei der Ring 133 nach innen hin vier in gleichmäßigen Abständen angeordnete Vorsprünge 134 aufweist. Wenn das Fisheye-Objektiv 11 am Adapter 13 montiert wird, greifen entsprechende Gegenstücke (hier nicht dargestellt) am Fisheye-Objektiv 11 in die Zwischenräume zwischen den Vorsprüngen 134 ein. Durch Verdrehen des Drehrings 133 werden dann die Gegenstücke des Fisheye-Objektivs 11 hinter den Vorsprüngen 134 eingeklemmt und somit das Fisheye-Objektiv 11 fest am Adapter 13 arretiert.

Figur 4 zeigt eine vereinfachte schematische Darstellung einer weiteren erfindungsgemäßen Anordnung 100. Auch hier ist ein quaderförmiges Gehäuse 20 vorgesehen, an dessen Oberseite zwei Kameras 10a, 10b und zwei LiDAR-Sensoren 30a, 30b fest montiert sind. Darüber hinaus ist an der Oberseite des Gehäuses 20 eine Sensor-/Empfängeranordnung 40 vorgesehen, in der verschiedene Sensoren und/oder Empfänger, wie 3-D Sensoren, IMU Sensoren, VSLAM Sensoren, GNNS-Empfänger oder RTK-GNSS Empfänger, vorgesehen sein können. Im Inneren des Gehäuses 20 ist eine Auswerteeinheit 50 vorgesehen, die wiederum eine Recheneinheit 51 und eine Speichereinheit 52 umfasst. Die Auswerteeinheit 50 ist mittels Leitungen 55 mit den Kameras 10a, 10b, den LiDAR-Sensoren 30a, 30b und der Sensor-/Empfängeranordnung 40 verbunden. Über die Leitungen 55 werden die empfangenen Daten an die Auswerteeinheit 50 bzw. deren Recheneinheit 51 übermittelt. In der Recheneinheit 51 werden die empfangenen Daten verarbeitet und finale Bilddaten erstellt, die dann in der Speichereinheit 52 gespeichert werden. Die Speichereinheit 52 ist mittels einer Leitung 55 mit einer Speicherschnittstelle 53 verbunden, über die ein externes Gerät angeschlossen werden kann und die Bilddaten an das externe Gerät übermittelt werden können. Auch ist eine mit der Auswerteeinheit über eine Leitung 55 verbundene Sendeeinheit 54 vorgesehen, über die die Bilddaten kabellos an externe Empfänger versendet werden können.

### Bezugszeichenliste

- 100: Mobile Mapping Anordnung

- 10, 10a, 10b: Kamera
- 11: Fisheye-Objektiv
- 12: Kameragrundkörper
- 13: Adapter
- 131: Grundplatte
- 132: Stutzen
- 133: Drehring
- 134: Vorsprünge
- 14: Kameragehäuse
- 15: Schutzhülse

- 20: Gehäuse
- 21: Kühlrippen
- 22: Kühlkörper
- 23: Kameramontagekörper
- 24: Halterung
- 25: Montageelement

- 30a, 30b: LiDAR-Sensor
- 31: LiDAR-Halterung

- 40: Sensor-/Empfängeranordnung

- 50: Auswerteeinheit
- 51: Recheneinheit
- 52: Speichereinheit
- 53: Speicherschnittstelle
- 54: Sendeeinheit
- 55: Leitungen

## Patentansprüche

1. Mobile Mapping Anordnung (100) zur mobilen Erfassung raumbezogener Daten, insbesondere zur Outdoor-Anwendung, umfassend mindestens eine Kamera (10, 10a, 10b), wobei die mindestens eine Kamera (10, 10a, 10b) ein Fisheye-Objektiv (11) mit einem Bildwinkel von mindestens 180° umfasst, eine Auflösung von mindestens 100 Megapixeln aufweist und einen als Global Shutter ausgebildeten Verschluss aufweist, sowie eine Auswerteeinheit (50), die zum Empfang und zur Verarbeitung von von der mindestens einen Kamera (10, 10a, 10b) empfangenen Daten und zur Ausgabe von Bilddaten ausgebildet ist.

2. Anordnung (100) nach Anspruch 1, wobei die Anordnung (100) maximal zwei Kameras (10a, 10b), insbesondere genau zwei Kameras (10a, 10b), umfasst, und die beiden Kameras (10a, 10b) insbesondere derart angeordnet sind, dass sie zusammen einen Bildwinkel von 360° zur Erfassung einer vollständigen sphärischen Ansicht abdecken.

3. Anordnung (100) nach Anspruch 1 oder 2, wobei die Anordnung (100) ein oder mehrere Sensoren, insbesondere LiDAR-Sensoren (30a, 30b), 3-D Sensoren, IMU Sensoren oder VSLAM Sensoren und/oder Empfänger, insbesondere GNNS oder RTK-GNSS Empfänger, umfasst, wobei die Sensoren und/oder Empfänger zur Weiterleitung der von ihnen erfassten Daten an die Auswerteeinheit (50) ausgebildet sind, und wobei die Auswerteeinheit (50) zur Verarbeitung der erfassten Daten ausgebildet ist.

4. Anordnung (100) nach einem der vorhergehenden Ansprüche, wobei die Anordnung (100) ein Gehäuse (20) umfasst und die Auswerteeinheit (50) in dem Gehäuse (20) und die mindestens eine Kamera (10, 10a, 10b) in oder an dem Gehäuse (20) angeordnet sind, wobei bevorzugt die ein oder mehreren Sensoren und/oder Empfänger ebenfalls im oder am Gehäuse (20) angeordnet sind.

5. Anordnung (100) nach Anspruch 4, wobei das Gehäuse (20) als Schutzgehäuse gegen Umwelteinflüsse ausgebildet ist und eine Schutzklasse von IP65 oder höher, bevorzugt von IP66 oder höher, aufweist.

6. Anordnung (100) nach einem der vorhergehenden Ansprüche, wobei die Auswerteeinheit (50) zur Endverarbeitung der empfangenen Daten, insbesondere in Echtzeit, und zur Erzeugung fertiger Bilddatensätze ausgebildet ist.

7. Anordnung (100) nach einem der vorhergehenden Ansprüche, wobei das Fisheye-Objektiv (11) der mindestens einen Kamera (10, 10a, 10b) einen Bildwinkel von größer 180°, bevorzugt von größer oder gleich 200°, besonders bevorzugt von größer oder gleich 220° aufweist, wobei die Anordnung (100) insbesondere zwei Kameras (10a, 10b) mit einem solchen Fisheye-Objektiv (11) aufweist.

8. Anordnung (100) nach einem der vorhergehenden Ansprüche, wobei die mindestens eine Kamera (10, 10a, 10b) eine Auflösung von mindestens 120 Megapixeln aufweist, wobei bevorzugt zwei Kameras (10a, 10b) vorgesehen sind, die beide eine Auflösung von mindestens 120 Megapixeln aufweisen.

9. Anordnung (100) nach einem der vorhergehenden Ansprüche, wobei die Anordnung (100) einen Adapter (13) aufweist, mittels dessen das Fisheye-Objektiv (11) an der mindestens einen Kamera (10, 10a, 10b) befestigt ist.

10. Anordnung (100) nach einem der vorhergehenden Ansprüche, wobei die Anordnung (100) als kompakte tragbare Einheit ausgebildet ist, sodass die Anordnung (100) von einem Benutzer getragen und/oder an einem Fahrzeug, insbesondere auf einem Fahrzeugdach, installiert werden kann.
